# EUROPEAN PATENT APPLICATION

(11) **EP 4 190 189 A1**
(43) Date of publication of application: **07.06.2023**
(21) Application number: 21855339.4
(22) Date of filing: 22.07.2021
(51) Int. Cl.: A24F 40/50, A24F 40/46, A24F 40/40

(54) **ATOMIZATION HEATING CONTROL METHOD AND DEVICE, AEROSOL GENERATING DEVICE AND STORAGE MEDIUM**

(30) Priority: 13.08.2020 CN 202010812293
(71) Applicant: Shenzhen Smoore Technology Limited, Shenzhen, Guangdong 518102 (CN)
(72) Inventor: LEI, Guilin, Shenzhen, Guangdong 518102 (CN); XIE, Yajun, Shenzhen, Guangdong 518102 (CN)
(74) Representative: Manitz Finsterwald Patent- und Rechtsanwaltspartnerschaft mbB
(86) International application number: PCT/CN2021/107736
(87) International publication number: WO 2022/033286

(57) **Abstract**

The present application relates to an atomization heating control method and device, an aerosol generating device, and a storage medium. Said method comprises: controlling electric power supplied to a heating element, such that in a first stage, the heating element is controlled to heat, at a preset first power, to a preset first temperature range, so that the heating element starts to atomize an aerosol to form a matrix; and in a second stage, the heating power of the heating element is controlled to fluctuate and change, so that the temperature of the heating element fluctuates and changes within a preset second temperature range. In the present application, the heating element is controlled to heat, at the first power, to the preset first temperature range, and to start atomizing the aerosol to form a matrix, and then in the second stage, the heating power of the heating element is controlled to fluctuate and change, so that the temperature of the heating element fluctuates and changes within the second temperature range, such that the heating element can have a cooling time, , and the heating element can fully supplement the aerosol to form the matrix, avoiding local dry burning and reducing generation of carbonized particles.

## Description

### CROSS-REFERENCE TO RELATED APPLICATIONS

This application claims priority to Chinese Patent Application No. 2020108122939, filed on August 13, 2020, entitled "VAPORIZATION HEATING CONTROL METHOD AND APPARATUS, AEROSOL-GENERATION APPARATUS, AND STORAGE MEDIUM", the entire content of which is incorporated herein by its reference.

### TECHNICAL FIELD

This application relates to the field of aerosol vaporization technologies, and in particular, to a vaporization heating control method and apparatus, an aerosol-generation apparatus, and a storage medium.

### BACKGROUND

As vaporization technologies develop, e-cigarette technologies emerge. An e-cigarette, also known as a virtual cigarette, or an electronic vaporization apparatus, is used as a substitute for a cigarette and is also used for smoking cessation. The e-cigarette uses a heating element to vaporize e-liquid for inhalation by a user.

After starting to operate, a current e-cigarette generally controls a temperature of the heating element to increase rapidly, so that a vaporization temperature can be quickly reached, and e-liquid starts to be vaporized. In addition, after the vaporization is started, the e-cigarette performs heating at constant power, so that the heating element can perform heating at a relatively stable temperature, and an amount of aerosols generated through the vaporization is relatively uniform.

However, in a current heating method, e-liquid on the heating element that can be heated gradually decreases after continuous heating, and then e-liquid is extracted from a liquid storage cavity to be continuously heated. However, during constant power heating, vapor pressure of an air film on a vaporization surface of the heating element is relatively large, which generates an extrusion effect on e-liquid in a micropore and near the micropore. As a result, e-liquid on the vaporization surface cannot be replenished in time, and continued heating may cause overheating of the vaporization surface, and even local no-load operation. Damage to a vaporization assembly is further caused, and cigarette soot, a burnt flavor, and other harmful substances are generated on the heating element, which affects normal use of a user.

### SUMMARY

Based on this, it is necessary to provide a vaporization heating control method and apparatus, an aerosol-generation apparatus, and a storage medium that can reduce occurrence of overheating of a vaporization surface to resolve the foregoing technical problems.

A vaporization heating control method is applied to an aerosol-generation apparatus is provided. The aerosol-generation apparatus includes a heater including at least one heating element configured to heat an aerosol-forming substrate, and a power supply configured to supply power to the heating element.

The method includes:
controlling the power supplied to the heating element;
controlling the heating element to heat to a preset first temperature range at a preset first power in a first stage so as to cause the heating element to start to vaporize the aerosol-forming substrate; and
controlling a heating power of the heating element to fluctuate in a second stage so as to cause a temperature of the heating element to fluctuate within a preset second temperature range.

In an embodiment, the method further includes:
adjusting the heating power of the heating element in a third stage so as to cause the temperature of the heating element to be maintained within a preset third temperature range, where a maximum temperature difference of the third temperature range is less than a maximum temperature difference of the second temperature range.

In an embodiment, in the second stage, an absolute value of a difference between the heating power obtained by two adjacent fluctuations of the heating element is greater than a preset first power difference.

In an embodiment, in the third stage, the heating power of the heating element fluctuates, and the absolute value of the difference between the heating power obtained by two adjacent fluctuations of the heating element is greater than a preset second power difference less than the first power difference.

In an embodiment, the controlling the heating power of the heating element to fluctuate in the second stage so as to cause the temperature of the heating element to fluctuate within the preset second temperature range includes:
controlling the heating element to reduce the heating power to a preset second power to perform heating after the heating element continuously performs heating at the first power for a preset first time; and
controlling the heating element to increase the heating power to a preset third power to perform heating after the heating element continuously performs heating at the second power for a preset second time.

In an embodiment, the controlling the heating power of the heating element to fluctuate in the second stage so as to cause the temperature of the heating element to fluctuate within the preset second temperature range includes:
periodically adjusting the heating power of the heating element so as to cause the temperature of the heating element to periodically fluctuate within the second temperature range.

A vaporization heating control apparatus is provided, including:
a first heating control module configured to control a heating element to heat to a preset first temperature range at a preset first power in a first stage so as to cause the heating element to start to vaporize an aerosol-forming substrate; and
a second heating control module configured to control heating power of the heating element to fluctuate in a second stage so as to cause a temperature of the heating element to fluctuate within a preset second temperature range.

An aerosol-generation apparatus is provided, including: a heater including at least one heating element configured to heat an aerosol-forming substrate. The vaporization heating control method according to any one of the foregoing embodiments is applied to the aerosol-generation apparatus.

In an embodiment, the heating element is a porous ceramic heating element.

An aerosol-generation apparatus is provided, including:
a heater including at least one heating element configured to heat an aerosol-forming substrate;
a power supply configured to supply power to the heating element; and
a controller including a memory and a processor, the memory storing a computer program, and the processor being configured to implement the following steps when executing the computer program:
   controlling the heating element to heat to a preset first temperature range at a preset first power in a first stage so as to cause the heating element to start to vaporize the aerosol-forming substrate; and
   controlling a heating power of the heating element to fluctuate in a second stage so as to cause a temperature of the heating element to fluctuate within a preset second temperature range.

A computer-readable storage medium storing a computer program, the computer program, when executed by a processor, implementing the following steps:
controlling a heating element to heat to a preset first temperature range at a preset first power in a first stage so as to cause the heating element to start to vaporize an aerosol-forming substrate; and
controlling a heating power of the heating element to fluctuate in a second stage so as to cause a temperature of the heating element to fluctuate within a preset second temperature range.

According to the foregoing vaporization heating control method and apparatus, aerosol-generation apparatus, and storage medium, by controlling the heating element to heat to the preset first temperature range at the first power, the aerosol-forming substrate starts to be vaporized. Then, in the second stage, the heating power of the heating element is controlled to fluctuate so as to cause the temperature of the heating element to fluctuate within the second temperature range, so that the heating element can have time to lower the temperature, instead of continuously maintaining a relatively high temperature to perform heating, and vapor pressure of an air film on the heating element is reduced. Therefore, the heating element can fully replenish the aerosol-forming substrate, thereby preventing local no-load operation and reducing generation of carbonized particles.

### BRIEF DESCRIPTION OF THE DRAWINGS

To describe the technical solutions of the embodiments of this application or the conventional technologies more clearly, the following briefly introduces the accompanying drawings required for describing the embodiments or the conventional technologies. Apparently, the accompanying drawings in the following description show only some embodiments of this application, and a person of ordinary skill in the art may still derive other accompanying drawings from these accompanying drawings without creative efforts.
FIG. 1 is a schematic flowchart of a vaporization heating control method in an embodiment.
FIG. 2 is a power change diagram of performing heating using constant power and a vaporization heating control method in an embodiment.
FIG. 3 is a temperature change diagram of performing heating using constant power and a vaporization heating control method in an embodiment.
FIG. 4 is a schematic diagram of a heating element generating an air film through heating in an embodiment.
FIG. 5 is a schematic flowchart of a vaporization heating control method in another embodiment.
FIG. 6 is a schematic flowchart of steps of controlling a heating power of a heating element to fluctuate so as to cause a temperature of the heating element to fluctuate within a preset second temperature range in an embodiment.
FIG. 7 is a schematic flowchart of a vaporization heating control method in still another embodiment.
FIG. 8 is a structural block diagram of a vaporization heating control apparatus in an embodiment.
FIG. 9 is a structural block diagram of a vaporization heating control apparatus in another embodiment.

### DETAILED DESCRIPTION

For ease of understanding this application, this application is described more comprehensively below with reference to the related accompanying drawings. The accompanying drawings show embodiments of this application. However, this application may be implemented in many different forms, and is not limited to the embodiments described in this specification. On the contrary, the embodiments are provided to make the disclosed content of this application more comprehensive.

Unless otherwise defined, meanings of all technical and scientific terms used in this specification are the same as those usually understood by a person skilled in the art to which this application belongs. In this specification, terms used in the specification of this application are merely intended to describe objectives of the specific embodiments, but are not intended to limit this application.

It may be understood that terms "first", "second" and the like used in this application may be used for describing various features in this specification, but the features are not limited by the terms. The terms are only used for distinguishing one technical feature from another technical feature. For example, a first temperature range and a second temperature range are two temperature ranges corresponding to different stages. The first temperature range and the second temperature range may be the same temperature range or different temperature ranges.

When used herein, the singular forms "a", "an" and "the" may also include the plural form, unless otherwise clearly indicated. It should be further understood that the terms "comprise/include" or "have" specify the presence of stated features, integers, steps, operations, components, parts, or combinations thereof, but do not preclude the possibility of the presence or addition of one or more other features, integers, steps, operations, components, parts, or combinations thereof. In addition, the term "and/or" used in this specification includes any and all combinations of related listed items.

As described in the background, the aerosol vaporization apparatus in the related art has a problem of easy generation of cigarette soot and a burnt flavor. The inventor finds through research that reasons for this problem are that, e-liquid needs to have a certain superheat degree when the e-liquid is heated and vaporized to form an aerosol, while there are many components in the e-liquid, including propylene glycol, glycerol, and flavors and fragrances, a mixture of these components is a non-azeotropic substance, and boiling points of some components thereof are far lower than the superheat degree. However, a constant power heating mode causes some components of the e-liquid to be under an overheating condition for a long time, and a substance in the e-liquid that has a low boiling point undergoes a coking reaction during vaporization of the e-liquid and carbonized particles are generated. Under a continuous operation of the aerosol vaporization apparatus, the carbonized particles continuously accumulate and deteriorate, and the carbonized particles accumulated on the vaporization surface generate a burnt flavor after long-time heating and baking at a high temperature.

Based on the foregoing reasons, this application provides a heating control solution that can reduce generation of cigarette soot and a burnt flavor. In addition, a vaporization amount can be ensured without affecting user experience.

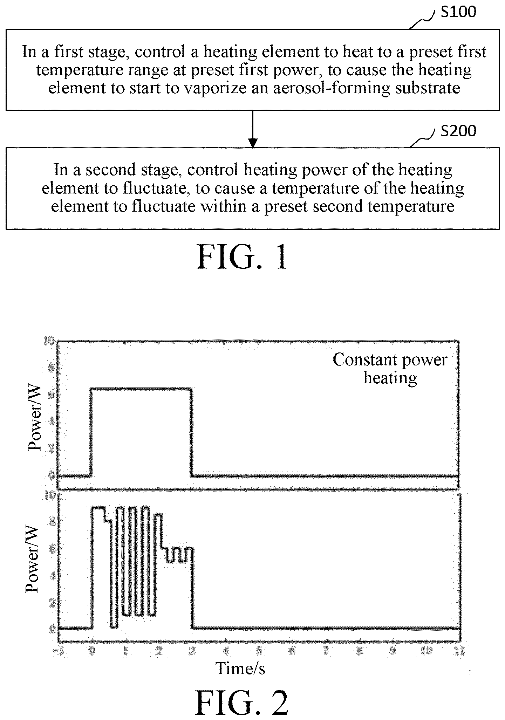

In an embodiment, as shown in FIG. 1, a vaporization heating control method applied to an aerosol-generation apparatus is provided. The aerosol-generation apparatus includes a heater including at least one heating element configured to heat an aerosol-forming substrate, and a power supply configured to supply power to the heating element. The method includes: controlling the power supplied to the heating element, and performing the following steps:

Step S 100: in a first stage, the heating element is controlled to heat to a preset first temperature range at a preset first power so as to cause the heating element to start to vaporize the aerosol-forming substrate.

The first stage may be a first heating stage during each vaporization heating operation performed by the aerosol-generation apparatus, or a first heating stage of one heating cycle during each vaporization heating operation performed by the aerosol-generation apparatus. The first power needs to use a relatively large power. The heating element, by performing heating at the first power, can quickly reach a vaporization temperature and start vaporization, so that a speed at which the aerosol-generation apparatus starts to generate an aerosol is ensured. The first temperature range is a temperature range in which the aerosol-forming substrate can be vaporized. In an embodiment, a lower limit temperature of the first temperature range is greater than a vaporization critical temperature of the aerosol-form substrate, where the vaporization critical temperature refers to a critical temperature that the aerosol-forming substrate can start to be vaporized.

Step S200: in a second stage, the heating power of the heating element is controlled to fluctuate so as to cause a temperature of the heating element to fluctuate within a preset second temperature range.

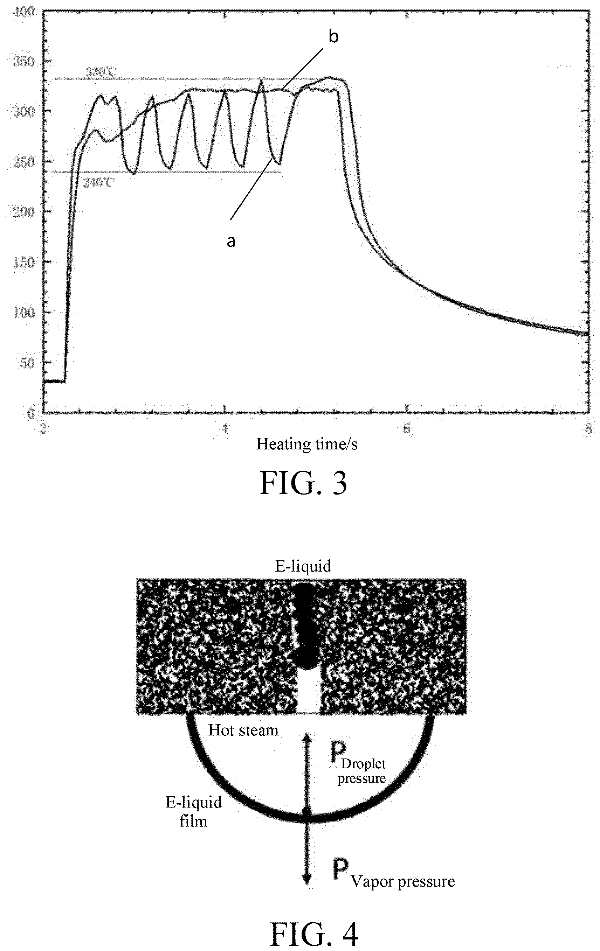

The second stage may be a second heating stage during each vaporization heating operation performed by the aerosol-generation apparatus, or a second heating stage of one heating cycle during each vaporization heating operation performed by the aerosol-generation apparatus. At this stage, the heating power of the heating element is controlled to fluctuate between high power and low power, but the temperature of the heating element needs to be maintained to fluctuate within the second temperature range. That is, by alternately using high and low power, the temperature of the heating element is caused to fluctuate up and down within the second temperature range, and a heating temperature is reduced after heating is performed at a high temperature for a period of time, and high temperature heating is performed again after heating is performed at a low temperature for a period of time. When the heating element performs heating at low power, vapor pressure in an air film can be lowered, so that the aerosol-forming substrate in a ceramic micropore can overcome an acting force of the vapor pressure under an action of capillary force, and supplement e-liquid to a vaporization surface of the heating element. When entering high-power heating in a next time period, sufficient aerosol-forming substrates can be provided for heating, which avoids local no-load operation, reduces cigarette soot caused by a continuous high temperature, and avoids a burnt flavor. In addition, since the temperature fluctuates within a certain range, different from intermittent heating, this temperature control method uses a feature that a heating body has a thermal inertia, and when switching is performed between high and low power, the temperature does not drop sharply to a temperature that vaporization is not allowed, thereby ensuring an amount of vapor. FIG. 2 is a power change diagram of performing heating using constant power and using a vaporization temperature control method of this application in an embodiment. FIG 3 is a temperature change diagram of performing heating using constant power (a curve b) and using a vaporization temperature control method of this application to heat (a curve a) in an embodiment. It can be seen that time that a temperature exceeds 300°C has reduced nearly by half.

In an embodiment, if the aerosol-forming substrate is e-liquid, due to complex components of the e-liquid, boiling points of different substances are different. For example, boiling points of main substances in some common e-liquid are generally between 189°C to 300°C. Continuous high-temperature heating causes a substance with a low boiling point to undergo high temperature cracking and generate a harmful substance. In this application, by actively controlling a temperature in a second stage, a temperature of a vaporization surface of the heating element fluctuates within a temperature range, which can not only cause various components in the e-liquid to be boiled and vaporized respectively, but also reduce a reaction degree of the high temperature cracking of the e-liquid, thereby reducing the generation of the harmful substance.

As shown in FIG. 4, overheating and boiling e-liquid forms bubbles, and vapor pressure generated by the bubbles is determined by the temperature of the vaporization surface of the heating element. During low-power heating, a superheat degree of the e-liquid is relatively low, and large bubbles cannot be formed. In this case, the vapor pressure of the bubbles is relatively low, and the e-liquid in a liquid guiding hole of the heating element can supply liquid to the vaporization surface under capillary force. During high-power heating, due to a high temperature of the vaporization surface, the e-liquid is overheating and generates large bubbles. In this case, the vapor pressure of the bubbles is greater than the capillary force, so that the e-liquid in the liquid guiding hole is extruded in a direction toward an e-liquid storage tank. By alternately using high and low power to perform heating, the e-liquid can move continuously, so that it is difficult for carbonized particles to stay and adhere to the vaporization surface of the heating element, thereby reducing accumulation of cigarette soot.

According to the foregoing vaporization heating control method, by controlling the heating element to heat to the preset first temperature range at the first power, the aerosol-forming substrate starts to be vaporized. Then, in the second stage, the heating power of the heating element is controlled to fluctuate so as to cause the temperature of the heating element to fluctuate within the second temperature range, so that the heating element can have time to lower the temperature, instead of continuously maintaining a relatively high temperature to perform heating, and vapor pressure of an air film on the heating element is reduced. Therefore, the heating element can fully replenish the aerosol-forming substrate, thereby preventing local no-load operation and reducing generation of carbonized particles.

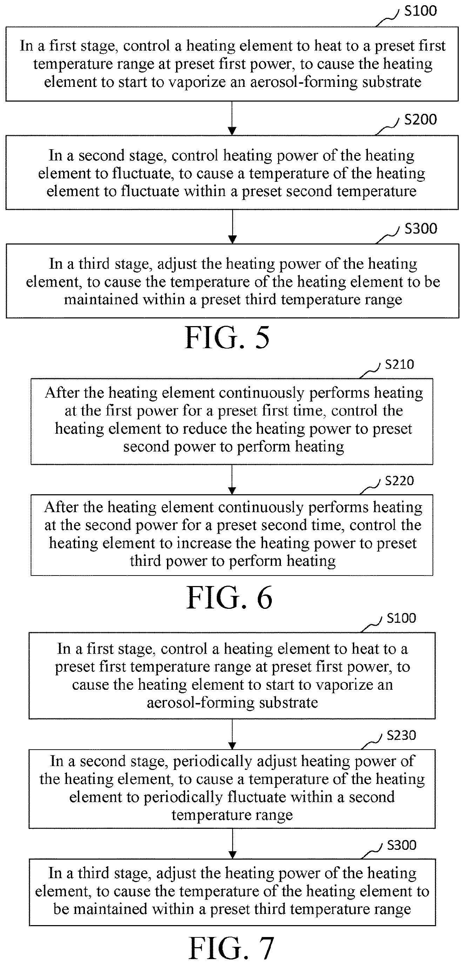

In an embodiment, as shown in FIG. 5, the vaporization heating control method further includes:

Step S300: in a third stage, the heating power of the heating element is adjusted so as to cause the temperature of the heating element to be maintained within a preset third temperature range. A maximum temperature difference of the third temperature range is less than a maximum temperature difference of the second temperature range.

The maximum temperature difference refers to a difference between an upper limit and a lower limit of a temperature range. The maximum temperature difference of the third temperature range is a difference between an upper limit temperature and a lower limit temperature of the third temperature range; and the maximum temperature difference of the second temperature range is a difference between an upper limit temperature and a lower limit temperature of the second temperature range.

The third stage may be a third heating stage during each vaporization heating operation performed by the aerosol-generation apparatus, or a third heating stage of one heating cycle during each vaporization heating operation performed by the aerosol-generation apparatus. In the third stage, the temperature of the heating element is controlled to fluctuate within a relatively small temperature range, to further ensure the amount of vapor generated by the aerosol-generation apparatus. In the third stage, the heating power of the heating element may be a constant power or a fluctuated power.

In an embodiment, in the second stage, an absolute value of a difference between the heating power obtained by two adjacent fluctuations of the heating element is greater than a preset first power difference.

In the second stage, to ensure that the heating element can fully and timely replenish e-liquid, it is necessary to ensure that a temperature difference of a temperature fluctuation of the heating element is large enough, so that there is sufficient time for the temperature to rise from a lower temperature to a higher temperature, and various components can be boiled fully. Therefore, a difference between the high and low power of each alternate change of the heating element needs to be controlled to be large enough, and power regulation may be controlled by the preset first power difference. The high power in the heating power of each alternate change may be a fixed power value or a variable power value; and the low power may be a fixed power value or a variable power value, provided that the absolute value of the difference between the heating power of two adjacent fluctuations is greater than the first power difference. For example, first high power is used at time t1, first low power is used at time t2, and second high power is used at time t3. The time t1, the time t2, and the time t3 are three consecutive time periods, where an absolute value of a difference between the first high power and the first low power needs to be greater than the first power difference; and an absolute value of the difference between the first low power and the second high power also needs to be greater than the first power difference.

In an embodiment, in the third stage, the heating power of the heating element fluctuates, and the absolute value of the difference between the heating power obtained by two adjacent fluctuations of the heating element is greater than a preset second power difference, where the second power difference is less than the first power difference.

In the third stage, to ensure an amount of vapor and avoid maintaining overheating for a long time so as to cause generation of cigarette soot or the heating element to be unable to replenish e-liquid in time, the heating power of the heating element is controlled to fluctuate at a fluctuation difference lower than that of the second stage. The heating power of the heating element is controlled by the preset second power difference to ensure that the temperature of the heating element changes to a certain extent, but the temperature difference is less than that of the second stage.

In an embodiment, as shown in FIG. 6, the step of controlling the heating power of the heating element to fluctuate in the second stage so as to cause the temperature of the heating element to fluctuate within the preset second temperature range includes:

Step S210: after the heating element continuously performs heating at the first power for a preset first time, the heating element is controlled to reduce the heating power to a preset second power to perform heating.

After the heating element continuously performs heating at the first power for the preset first time, that is, after the first stage, the heating element is controlled to reduce the heating power to the preset second power to perform heating. Since in the first stage, a temperature that allows for vaporization needs to be quickly reached, a value of the first power is relatively high. After the first stage ends, the heating power is reduced, and the second power that is lower than the first power is used for performing heating, thereby reducing the temperature of the heating element, providing time for the heating element to replenish e-liquid, and providing sufficient aerosol-forming substrates for high-power heating in a next time period.

Step S220: after the heating element continuously performs heating at the second power for a preset second time, the heating element is controlled to increase the heating power to a preset third power to perform heating.

After the heating element performs heating for the preset second time at the second power, to achieve a fluctuation of the heating power of the heating element in the second stage, the heating power is increased to the third power. The third power is greater than the second power so as to cause the heating element to enter a high-temperature heating state and fully vaporize the aerosol-forming substrate.

The second stage may be divided into several time periods according to heating characteristics of different heating elements to control the fluctuation of the heating power, and alternately use high and low power to perform heating. For example, the second stage is divided into N time periods, including n1 to nN time periods. First low power is used in the n1 time period, first high power is used in the n2 time period, second low power is used in the n3 time period, ..., nth low power is used in the n(N-1) time period, and nth high power is used in the nN time period. Each time period in the n1 to nN time period may be equal or not equal, or partially equal and partially not equal. Both n and N are natural numbers. By alternately using the high and low power to perform heating, time of high-temperature heating can be shortened, and overheating time of the heating element can be reduced. While ensuring an amount of vapor, generation of cigarette soot is reduced, a burnt flavor is avoided, and local no-load operation is avoided.

In an embodiment, as shown in FIG. 7, the step of controlling the heating power of the heating element in the second stage so as to cause the temperature of the heating element to fluctuate within the preset second temperature range includes:

Step S230: the heating power of the heating element is adjusted periodically so as to cause the temperature of the heating element to periodically fluctuate within the second temperature range.

The heating power of the heating element is adjusted periodically, that is, the second stage is divided into N time periods. By alternately controlling high power and low power of the heating element to perform heating in the N time periods, the temperature of the heating element is caused to periodically fluctuate within the second temperature range. For example, the N time periods include n1 to nN. First low power is used in the n1 time period, first high power is used in the n2 time period, second low power is used in the n3 time period, ..., nth low power is used in the n(N-1) time period, and nth high power is used in the nN time period. Each time period in the n1 to nN time periods is equal, so that the temperature of the heating element periodically fluctuates. A superheat degree of the aerosol-forming substrate changes periodically, which can cause a boiling bubble to increase and shrink intermittently, so that a squeezing effect is formed on the aerosol-forming substrate around a micropore of the heating element, and carbonized particles are not easily attached to a surface of the heating element or blocked in a liquid guiding hole of the heating element.

It should be understood that although steps of the flowcharts in FIG. 1 and FIG. 5 to FIG. 7 are shown sequentially according to arrows, the steps are not necessarily performed according to a sequence indicated by the arrows. Unless otherwise clearly specified in this specification, the steps are performed without any strict sequence limit, and may be performed in other sequences. In addition, at least some steps in FIG. 1 and FIG. 5 to FIG. 7 may include a plurality of steps or a plurality of stages. The steps or the stages are not necessarily performed at the same moment, and instead may be performed at different moments. The steps or the stages are not necessarily performed sequentially, and instead may be performed in turn or alternately with another step or at least some of steps or stages of the another step.

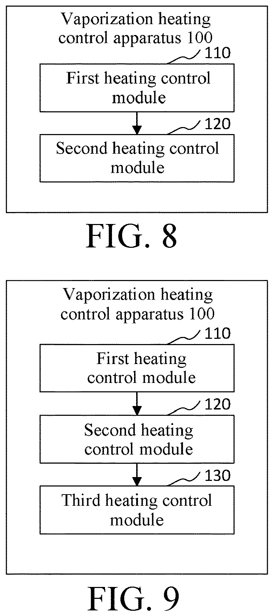

In an embodiment, as shown in FIG. 8, a vaporization heating control apparatus 100 is provided, including:
a first heating control module 110 configured to control a heating element to heat to a preset first temperature range at a preset first power in a first stage so as to cause the heating element to start to vaporize an aerosol-forming substrate; and
a second heating control module 120 configured to control heating power of the heating element to fluctuate in a second stage so as to cause a temperature of the heating element to fluctuate within a preset second temperature range.

In an embodiment, as shown in FIG. 9, the vaporization heating control apparatus 100 further includes:
a third heating control module 130 configured to adjust the heating power of the heating element so as to cause the temperature of the heating element to be maintained within a preset third temperature range, where a maximum temperature difference of the third temperature range is less than a maximum temperature difference of the second temperature range.

In an embodiment, the second heating control module includes:
a second power heating unit configured to control the heating element to reduce the heating power to a preset second power to perform heating after the heating element continuously performs heating at the first power for a preset first time; and
a third power heating unit configured to control the heating element to increase the heating power to a preset third power to perform heating after the heating element continuously performs heating at the second power for a preset second time.

For a specific limitation on the vaporization heating control apparatus, reference may be made to the limitation on the vaporization heating control method above. Details are not described herein again. The modules in the foregoing vaporization heating control apparatus may be implemented entirely or partially by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

In an embodiment, an aerosol-generation apparatus is provided, including a heater including at least one heating element configured to heat an aerosol-forming substrate. The vaporization heating control method according to any one of the foregoing embodiments is applied to the aerosol-generation apparatus.

In an embodiment, the heating element includes a porous ceramic heating element.

In an embodiment, an aerosol-generation apparatus is provided, including:
a heater including at least one heating element configured to heat an aerosol-forming substrate;
a power supply configured to supply power to the heating element; and
a controller including a memory and a processor, the memory storing a computer program, and the processor being configured to implement the following steps when executing the computer program:
   controlling the heating element to heat to a preset first temperature range at a preset first power in a first stage so as to cause the heating element to start to vaporize the aerosol-forming substrate; and
   controlling a heating power of the heating element to fluctuate in a second stage so as to cause a temperature of the heating element to fluctuate within a preset second temperature range.

In an embodiment, the processor is further configured to implement the following step when executing the computer program:
adjusting the heating power of the heating element in a third stage so as to cause the temperature of the heating element to be maintained within a preset third temperature range, where a maximum temperature difference of the third temperature range is less than a maximum temperature difference of the second temperature range.

In an embodiment, the processor is further configured to implement the following step when executing the computer program:
in the second stage, an absolute value of a difference between the heating power obtained by two adjacent fluctuations of the heating element is greater than a preset first power difference.

In an embodiment, the processor is further configured to implement the following step when executing the computer program:
in the third stage, the heating power of the heating element fluctuates, and the absolute value of the difference between the heating power obtained by two adjacent fluctuations of the heating element is greater than a preset second power difference less than the first power difference.

In an embodiment, the processor is further configured to implement the following steps when executing the computer program:
controlling the heating element to reduce the heating power to a preset second power to perform heating after the heating element continuously performs heating at the first power for a preset first time; and
controlling the heating element to increase the heating power to a preset third power to perform heating after the heating element continuously performs heating at the second power for a preset second time.

In an embodiment, the processor is further configured to implement the following step when executing the computer program:
periodically adjusting the heating power of the heating element so as to cause the temperature of the heating element to periodically fluctuate within the second temperature range.

In an embodiment, a computer-readable storage medium is provided, storing a computer program, the computer program, when executed by a processor, implementing the following steps:
controlling a heating element to heat to a preset first temperature range at a preset first power in a first stage so as to cause the heating element to start to vaporize an aerosol-forming substrate; and
controlling a heating power of the heating element to fluctuate in a second stage so as to cause a temperature of the heating element to fluctuate within a preset second temperature range.

In an embodiment, when executed by the processor, the computer program further implements the following step:
adjusting the heating power of the heating element in a third stage so as to cause the temperature of the heating element to be maintained within a preset third temperature range, where a maximum temperature difference of the third temperature range is less than a maximum temperature difference of the second temperature range.

In an embodiment, when executed by the processor, the computer program further implements the following step:
in the second stage, an absolute value of a difference between the heating power obtained by two adjacent fluctuations of the heating element is greater than a preset first power difference.

In an embodiment, when executed by the processor, the computer program further implements the following step:
in the third stage, the heating power of the heating element fluctuates, and the absolute value of the difference between the heating power obtained by two adjacent fluctuations of the heating element is greater than a preset second power difference, where the second power difference is less than the first power difference.

In an embodiment, when executed by the processor, the computer program further implements the following step:
controlling the heating element to reduce the heating power to a preset second power to perform heating after the heating element continuously performs heating at the first power for a preset first time; and
controlling the heating element to increase the heating power to a preset third power to perform heating after the heating element continuously performs heating at the second power for a preset second time.

In an embodiment, when executed by the processor, the computer program further implements the following step:
periodically adjusting the heating power of the heating element so as to cause the temperature of the heating element to periodically fluctuate within the second temperature range.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, a storage, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, and the like. The volatile memory may include a random access memory (RAM) or an external cache. For the purpose of description instead of limitation, the RAM is available in a plurality of forms, such as a static RAM (SRAM) or a dynamic RAM (DRAM).

In the description of this specification, description of reference terms such as "some embodiments", "other embodiments", or "an ideal embodiment" means that specific features, structures, materials, or features described in combination with the embodiment or example are included in at least one embodiment or example of this application. In this specification, schematic descriptions of the foregoing terms do not necessarily refer to a same embodiment or example.

The technical features in the foregoing embodiments may be randomly combined. For concise description, not all possible combinations of the technical features in the embodiment are described. However, provided that combinations of the technical features do not conflict with each other, the combinations of the technical features are considered as falling within the scope recorded in this specification.

The foregoing embodiments merely express several implementations of this application. The descriptions thereof are relatively specific and detailed, but should not be understood as limitations to the patent scope of this application. It should be noted that, a person of ordinary skill in the art may still make various changes and improvements without departing from the ideas of this application, which shall all fall within the protection scope of this application. Therefore, the patent protection scope of this application shall be subject to the protection scope of the appended claims.

## Claims

1. A vaporization heating control method, applied to an aerosol-generation apparatus comprising a heater comprising at least one heating element configured to heat an aerosol-forming substrate, and a power supply configured to supply power to the heating element, the method comprising:
controlling the power supplied to the heating element;
controlling the heating element to heat to a preset first temperature range at a preset first power in a first stage so as to cause the heating element to start to vaporize the aerosol-forming substrate; and
controlling a heating power of the heating element to fluctuate in a second stage so as to cause a temperature of the heating element to fluctuate within a preset second temperature range.

2. The vaporization heating control method according to claim 1, further comprising:
adjusting the heating power of the heating element in a third stage so as to cause the temperature of the heating element to be maintained within a preset third temperature range, wherein a maximum temperature difference of the third temperature range is less than a maximum temperature difference of the second temperature range.

3. The vaporization heating control method according to claim 2, wherein in the second stage, an absolute value of a difference between the heating power obtained by two adjacent fluctuations of the heating element is greater than a preset first power difference.

4. The vaporization heating control method according to claim 3, wherein in the third stage, the heating power of the heating element fluctuates, and the absolute value of the difference between the heating power obtained by two adjacent fluctuations of the heating element is greater than a preset second power difference less than the first power difference.

5. The vaporization heating control method according to claim 1, wherein the controlling the heating power of the heating element to fluctuate in the second stage so as to cause the temperature of the heating element to fluctuate within the preset second temperature range comprises:
controlling the heating element to reduce the heating power to the preset second power to perform heating after the heating element continuously performs heating at the first power for a preset first time; and
controlling the heating element to increase the heating power to a preset third power to perform heating after the heating element continuously performs heating at the second power for a preset second time.

6. The vaporization heating control method according to claim 1, wherein the controlling the heating power of the heating element to fluctuate in the second stage so as to cause the temperature of the heating element to fluctuate within the preset second temperature range comprises:
periodically adjusting the heating power of the heating element so as to cause the temperature of the heating element to periodically fluctuate within the second temperature range.

7. The vaporization heating control method according to claim 1, wherein a lower limit temperature of the first temperature range is greater than a vaporization critical temperature of the aerosol-forming substrate.

8. The vaporization heating control method according to claim 2, wherein in the third stage, the heating power of the heating element is a constant power or a fluctuated power.

9. A vaporization heating control apparatus, comprising:
a first heating control module configured to control a heating element to heat to a preset first temperature range at a preset first power in a first stage so as to cause the heating element to start to vaporize an aerosol-forming substrate; and
a second heating control module configured to control heating power of the heating element to fluctuate in a second stage so as to cause a temperature of the heating element to fluctuate within a preset second temperature range.

10. An aerosol-generation apparatus, comprising:
a heater comprising at least one heating element configured to heat an aerosol-forming substrate,
wherein the vaporization heating control method according to any one of claims 1 to 8 is applied to the aerosol-generation apparatus.

11. The aerosol-generation apparatus according to claim 10, wherein the heating element comprises a porous ceramic heating element.

12. An aerosol-generation apparatus, comprising:
a heater comprising at least one heating element configured to heat an aerosol-forming substrate;
a power supply configured to supply power to the heating element; and
a controller comprising a memory and a processor, the memory storing a computer program, and the processor being configured to implement the method according to any one of claims 1 to 8 when executing the computer program.

13. A computer-readable storage medium storing a computer program, the computer program, when executed by a processor, implementing the method according to any one of claims 1 to 8.
